Europäisches Patentamt

**European Patent Office**

**Office européen des brevets**

(19)

(11) Numéro de publication: **0 037 763**
**B1**

(12)

# FASCICULE DE BREVET EUROPEEN

(45) Date de publication du fascicule du brevet: **18.07.84**

(51) Int. Cl.³: **H 02 J 13/00**

(21) Numéro de dépôt: **81400438.8**

(22) Date de dépôt: **20.03.81**

(54) **Dispositif de télécommande d'appareils de chauffage raccordés à une installation d'alimentation en courant alternatif.**

(30) Priorité: **21.03.80 FR 8006392**

(43) Date de publication de la demande:
**14.10.81 Bulletin 81/41**

(45) Mention de la délivrance du brevet:
**18.07.84 Bulletin 84/29**

(84) Etats contractants désignés:
**AT CH DE FR GB LI SE**

(56) Documents cités:
**FR - A - 1 017 840**
**FR - A - 2 101 287**
**FR - A - 2 391 506**
**GB - A - 1 153 908**
**GB - A - 2 008 299**
**US - A - 4 024 528**

(73) Titulaire: **SOCIETE GENERALE DE FONDERIE**
**Société Anonyme Française**
**8 place d'Iéna**
**F-75783 Paris Cedex 16 (FR)**

(72) Inventeur: **Grimaud, Jean-Michel**
**55, boulevard d'Ambilly**
**F-95160 Montmorency (FR)**
Inventeur: **Poumey, Michel**
**4, Résidence du Parc**
**F-77530 Vaux le Penil (FR)**

(74) Mandataire: **Joly, Jean Jacques**
**CABINET BEAU DE LOMENIE 55, rue**
**d'Amsterdam**
**F-75008 Paris (FR)**

Courier Press, Leamington Spa, England.

## Description

La présente invention concerne un dispositif de télécommande d'appareils de chauffage raccordés à une installation d'alimentation en courant alternatif.

Un domaine particulier d'application de l'invention est celui de la transmission d'information de commande de marche-arrêt, ou de modification de fonctionnement, à des appareils de chauffage électriques domestiques ou même collectifs. Par appareils de chauffage on entend ici les appareils de chauffage direct ou à accumulation, les appareils de réchauffage d'eau sanitaire, les chaudières, les pompes à chaleur, .... et toutes combinaisons de différents générateurs de chauffage.

L'invention est notamment applicable au cas d'appareils dont la marche et l'arrêt sont commandés par une horloge ou un relais de télécommande au moment des changements quotidiens de période tarifaire. Cette commande appelée jour/nuit est réalisée généralement au moyen d'un conducteur particulier ou fil pilote. L'installation d'un appareil à commande jour/nuit nécessite alors une modification de l'installation électrique pour la mise en place du fil pilote. De plus, si plusieurs appareils sont à installer, un fil pilote doit être raccordé à chacun d'entre eux.

D'une façon plus générale, il peut être désiré de transmettre à un générateur électrique de chauffage une information commandant automatiquement non seulement la marche ou l'arrêt de l'appareil, mais, le cas échéant, une modification de puissance de fonctionnement, par exemple en vue d'une marche à puissance réduite.

Il est connu, par le document GB—A—1 153 908, un dispositif comportant: un émetteur central comprenant un détecteur de passage à zéro de la tension d'alimentation, un condensateur branché en série avec un circuit interrupteur aux bornes de l'installation, un circuit de charge du condensateur interposé entre celui-ci et une des bornes de l'installation d'alimentation pour permettre la charge du condensateur après chaque ouverture du circuit interrupteur, et un générateur d'informations codées par impulsions synchronisé par le détecteur pour commander la fermeture du circuit interrupteur en réponse à une impulsion produite par le générateur au moment d'un passage à zéro de la tension d'alimentation, et

— un récepteur associé à chaque appareil et comprenant un détecteur d'impulsions au passage à zéro de la tension d'alimentation et un circuit de décodage relié au détecteur d'impulsions pour fournir un signal d'identification lorsque l'information émise a été reconnue.

Dans ce dispositif connu, un signal de commande de mise en marche est produit sous forme de trois impulsions à intervalles déterminés et un signal de commande d'arrêt est produit de façon similaire.

L'invention a pour but de fournir un dispositif de télécommande dans lequel l'information de commande est transmise par des impulsions superposées à la tension d'alimentation dans une forme telle que, d'une part, la détection de cette information puisse être réalisée très facilement, et, d'autre part, la sécurité de fonctionnement vis-à-vis des parasites soit garantie.

L'invention a aussi pour but de fournir un dispositif dans lequel les impulsions sont produites sans introduire de perturbations sensibles notamment dans le réseau de distribution auquel l'installation est raccordée ou dans l'environnement radioélectrique.

Ce but est atteint au moyen d'un dispositif comportant:

— un circuit de filtrage interposé entre l'installation d'alimentation et un réseau de distribution sur lequel l'installation est branchée, de manière à empêcher la propagation dans le réseau des impulsions produites par l'émetteur,

— le générateur d'impulsions engendre des trains périodiques d'impulsions formés chacun d'impulsions de période prédéterminée égale à ou multiple de la demi-période de la tension d'alimentation, la période des trains d'impulsions étant au moins égale à plusieurs dizaines de fois leur durée, et

— le circuit de décodage comporte un circuit à coïncidence produisant un signal en réponse à la détection d'au moins deux impulsions séposiées d'un intervalle de temps égal à ladite période prédéterminée des impulsions de chaque train.

Les impulsions superposées à la tension d'alimentation étant produites lorsque celles-ci passe par zéro, elles peuvent donc être filtrées aisément au moyen d'un circuit de filtrage simple et bon marché.

De préférence, chaque impulsion superposée au passage à zéro de la tension d'alimentation a une polarité égale à celle de cette tension après son passage à zéro. La présence d'une impulsion est alors détectée si, immédiatement après passage à zéro, la tension d'alimentation a une amplitude très différente de zéro.

De préférence encore, lorsque l'information à transmettre est sous forme d'impulsions de polarité invariable, un même nombre d'impulsions de polarité opposée et de même durée sont superposées à la tension d'alimentation, toujours à des passages à zéro de celle-ci, de manière à conserver à celle-ci une valeur moyenne nulle.

D'autres particularités et avantages du dispositif conforme à l'invention ressortiront à la lecture de la description faite ci-après, à titre indicatif mais non limitatif, en référence aux dessins annexés sur lesquels:

— la figure 1 est un schéma montrant un mode de réalisation d'un dispositif conforme à l'invention destiné à la télécommande d'appareils électriques, et

— la figure 2 montre les formes d'onde de différents signaux produits dans l'émetteur et les récepteurs du dispositif illustré par la figure 1.

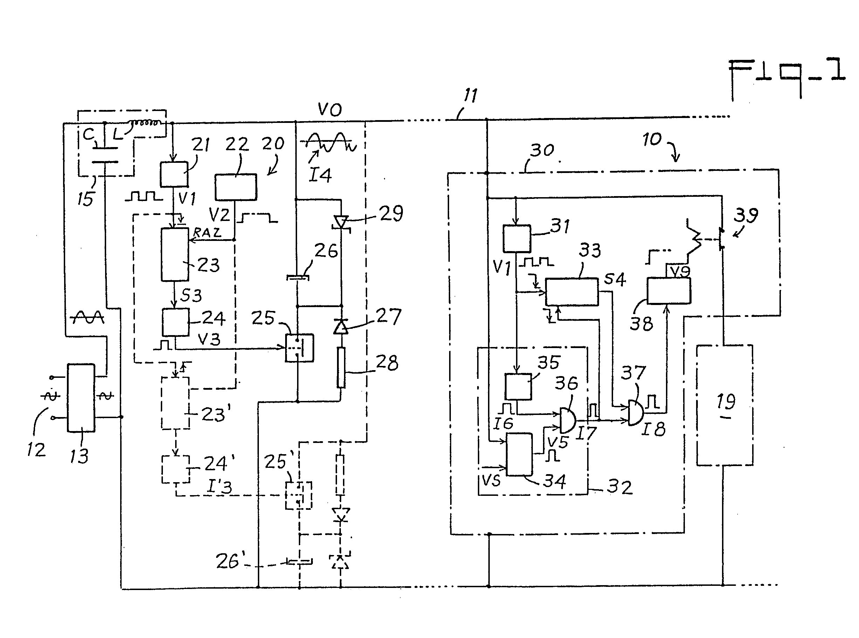

La figure 1 montre un dispositif susceptible d'être utilisé pour la télécommande jour/nuit d'appareils de chauffage 10. Chaque appareil est alimenté au moyen d'une fiche usuelle branchée sur une prise normale d'une installation 11 d'alimentation en courant électrique alternatif. L'installation 11 est par exemple une installation domestique d'abonné reliée à un réseau 12 de distribution d'énergie électrique par l'intermédiaire notamment d'un disjoncteur 13 et d'un compteur (non représenté).

Le dispositif conforme à l'invention comporte essentiellement un émetteur 20, des récepteurs 30 en nombre égal à celui des appareils 10 à télécommander et un circuit de filtrage 15 interposé entre l'émetteur 20 et le réseau 12. Chaque récepteur est directement incorporé dans l'appareil associé. Un seul récepteur est représenté sur le dessin.

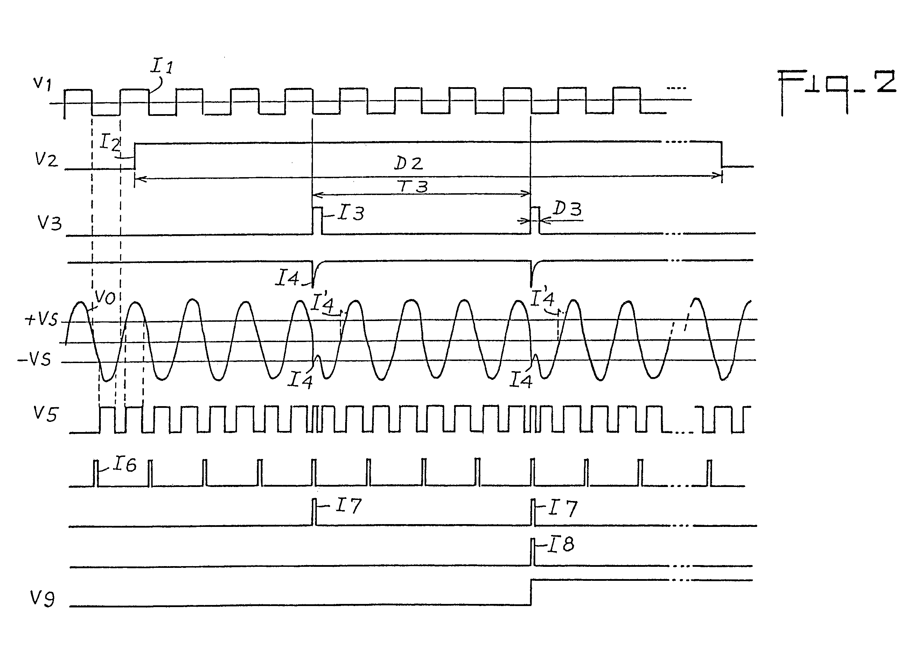

L'émetteur comporte un circuit de mise en forme 21 transformant la tension d'alimentation V0 en un signal V1 formé d'impulsions rectangulaires et de mêmes fréquence et phase que la tension V0 (voir figure 2). Les fronts avant et arrière des impulsions I1 du signal V1 coïncident avec les passages à zéro de V0, le circuit 21 constituant par là-même un détecteur de passage à zéro de V0.

Un oscillateur 22 est déclenché au moment où les appareils 10 doivent être commandés. Le déclenchement de l'oscillateur est par exemple effectué au moyen d'une horloge (non représentée) qui produit un signal au moment du changement de période tarifaire, comme dans le cas de la télécommande par fil pilote, de manière à mainmaintenir l'oscillateur en fonctionnement pendant la durée de tarification à taux réduit (tarif "heures creuses"). L'oscillateur 22 produit un signal V2 (figure 2) formé d'impulsions I2 de durée D2 égale à plusieurs fois la période T0 de la tension d'alimentation et de période T2 relativement longue. A titre indicatif, la durée D2 est égale à plusieurs dizaines de fois T0, par example 2 secondes, et la période T2 est égale à une ou plusieurs sieurs minutes, par exemple 5 minutes. De préférence, on choisit un rapport supérieur à 50 et même à 100 entre période et durée des impulsions produites par l'oscillateur 22.

Le signal V2 est appliqué à un compteur 23 pour commander la remise à zéro du compteur par le front avant de chaque impulsion I2 et autoriser pendant la durée D2 de chaque impulsion I2 le comptage des impulsions I1. Le compteur 23 est utilisé comme diviseur de fréquence. Lorsqu'un nombre prédéterminé d'impulsions I1 est compté, le compteur 23 revient à zéro, produit un signal de sortie S3 qui commande un circuit monostable 24.

Le circuit monostable 24 produit un signal V3 (figure 2) formé d'impulsions I3 de période T3 multiple de T0 et de durée D3 égale à une fraction de la moitié de la période T0, par exemple environ quelques millisecondes.

Chaque impulsion I3 commande la fermeture d'un interrupteur statique 25, par exemple un transistor ou un thyristor, branché en série avec un condensateur 26 aux bornes de l'alimentation 11.

Chaque front avant d'une impulsion I3 correspond au front avant ou arrière d'une impulsion I0, suivant que le compteur 23 est incrémenté en réponse à un front montant ou descendant. Dans l'exemple illustré, chaque impulsion I3 est produite au moment où la polarité de la tension V0 devient négative. La fermeture de l'interrupteur 25 provoque la décharge du condensateur 26 qui superpose alors une impulsion négative I4 (figure 2) à la tension V0 au moment où celle-ci passe par zéro dans le sens décroissant.

A la fin de l'impulsion I3, l'interrupteur 25 est réouvert et le condensateur 26 se charge par l'intermédiaire du circuit série diode 27-résistance 28 branché en parallèle sur l'interrupteur 25. La résistance 28 a une impédance élevée de manière à limiter le courant de charge du condensateur 26. Cette charge est donc progressive et n'introduit pas de perturbation notable sur la tension d'alimentation. Bien entendu, la constante de temps n'est toutefois pas choisie à une valeur trop élevée, afin de pouvoir amener le condensateur 26 au niveau de charge souhaité dans l'intervalle de temps séparant deux fermetures consécutives de l'interrupteur 25.

D'autres moyens pourraient être envisagés pour charger le condensateur 26 sans créer de perturbations de la tension V0. En particulier, le circuit de charge pourrait comporter un transformateur alimenté au primaire par la tension V0 et fournissant au secondaire la tension permettant, après redressement, la charge du condensateur.

Dans l'exemple illustré, le condensateur 26 est un condensateur polarisé. Une diode Zener 29 branchée en parallèle sur le condensateur 26 permet de limiter la tension aux bornes du condensateur 26 à une valeur prédéterminée indépendante de l'amplitude de la tension V0.

Pour une tension aux bornes du condensateur 26 limitée à une valeur donnée, il est possible de modifier la capacité du condensateur en fonction de l'énergie désirée pour produire chaque impulsion I4. En particulier, du fait du mode de charge retenu pour le condensateur 26, il est possible d'augmenter sa capacité sans risque de provoquer un appel de courant excessif et de déclencher le disjoncteur de l'installation, comme ce serait le cas si un condensateur de forte capacité était branché directement aux bornes de l'installation, en raison du courant de charge intense qui apparaîtrait.

Conformément à l'invention, un filtre 15 formé d'une inductance L et d'une capacité C est monté sur le circuit d'alimentation 10 en amont du branchement de la dérivation formée par le condensateur 26 et l'interrupteur 25 de manière à empêcher les impulsions 14 d'être transmises sur le réseau 12 où elles pourraient être la cause de perturbations sur des installations voisines connectées sur le même réseau. La bobine d'inductance L est branchée en série avec un des conducteurs d'alimentation tandis que le condensateur de capacité C est branché en parallèle entre ces conducteurs. A titre indicatif, les valeurs de L et C pourront être choisies égales à 1 mH et 20 $\mu$F, respectivement. Du fait que les perturbations à filtrer sont uniquement des impulsions qui se produisent à des passages à zéro de VO, on pourra choisir une bobine L dont le seuil de saturation soit relativement bas, par exemple 5 A. Ceci conduit à une bobine de dimensions raisonnables. Tel ne serait pas le cas si les impulsions à filtrer étaient superposées aux maxima et minima de la tension VO, donc à des instants où l'intensité du courant peut aisément atteindre plusieurs dizaines d'ampères dans une installation domestiques normale.

Les appareils 10 sont donc alimentés sous une tension à laquelle les impulsions 14 sont superposées.

Chaque récepteur 30 comporte un circuit de mise en forme 31 analogue au circuit 21 et produisant le même signal V1. Le signal V1 est appliqué, d'une part, à un circuit 32 détecteur d'impulsions au passage à zéro de VO et, d'autre part, à l'entrée de comptage d'un compteur 33 formant diviseur de fréquence avec le même rapport de division que le compteur 23.

Le circuit 32 comprend un comparateur 34 recevant, d'une part, la tension VO et, d'autre part, une tension de référence constante VS et produisant un signal de sortie V5 (figure 2) lorsque l'amplitude de VO dépasse, en valeur absolue, la valeur VS. Le circuit 32 comprend en outre un monostable 35 déclenché par les fronts descendants des impulsions 10 et produisant des impulsions 16 (figure 2) d'une durée brève, par exemple de l'ordre de 0,1 ms.

La valeur de référence VS est choisie de manière à être dépassée pendant la durée de chaque impulsion 16 uniquement dans le cas d'une variation brusque de la valeur de VO, c'est-à-dire dans le cas de la présence d'une impulsion 14 superposée à VO au passage de celle-ci à zéro dans le sens décroissant.

Les signaux produits par le comparateur 34 et le monostable 35 sont appliqués aux deux entrées d'une porte ET 36 qui délivre donc une impulsion 17 (figure 2) en sortie du circuit 32 en réponse à la présence d'une impulsion 14.

La première impulsion 17 remet à zéro le compteur 33 sur son front arrière.

Le compteur 33 compte alors les impulsions 10. Si une deuxième impulsion 17 est produite au moment où le compteur 33 revient à zéro en produisant un signal S4, cela signifie que deux impulsions successives ont été détectées dans le signal VO avec un intervalle de temps égal à la période des impulsions 13 et 14.

Une porte ET 37 dont les entrées sont reliées aux sorties du circuit détecteur 32 et du compteur 33 produit un signal d'identification sous forme d'une impulsion 18 (figure 2) en réponse à l'apparition simultanée du signal S4 et d'une impulsion 17.

L'impulsion 18 est appliquée à l'entrée d'un circuit monostable redéclenchable 38 de période T9 supérieure à la période de l'oscillateur 22, par exemple égale à 10 minutes. Le circuit 38 produit donc un signal de sortie V9 (figure 2) dès l'apparition de la première impulsion 18 et tant qu'il reçoit sur son entrée des impulsions séparées les unes des autres par des intervalles de temps inférieures à T9. En l'espèce, le monostable 38 est redéclenché tant que des trains successifs d'impulsions 13 sont produits, c'est-à-dire tant que l'oscillateur 22 fonctionne. Pendant tout ce temps, le signal V9 est maintenu et alimente la bobine d'excitation d'un relais 39 dont la fermeture connecte le charge 19 de l'appareil 10 sur l'alimentation 11.

Suivant le mode particulier de réalisation décrit ci-avant, l'information de télécommande est transmise sous forme de trains d'impulsions superposées à la tension d'alimentation au passage à zéro de celle-ci, les impulsions ayant dans chaque train une période fixe multiple de celle de la tension d'alimentation. Au niveau du récepteur, l'information de télécommande est reconnue si au moins deux impulsions successives séparées l'une de l'autre par ladite période sont détectées dans chacun des trains successifs.

Il en découle plusieurs avantages.

En premier lieu, le système présente une grande immunité aux parasites, puisque les impulsions sont envoyées au moment où la tension d'alimentation est nulle et le récepteur est synchronisé sur le passage à zéro de cette tension (détection synchrone).

Ensuite, la puissance moyenne d'émission est très faible puisque le rapport cyclique, c'est-à-dire le rapport entre temps d'émission et temps d'arrêt est petit

$$(\frac{2}{300-2}$$

dans l'exemple indiqué plus haut).

De plus, la perturbation radioélectrique est faible du fait que l'émission se fait par trains d'impulsions de durée brève (2 secondes) espacés par un intervalle de temps beaucoup plus long (300 secondes).

Enfin, l'influence des impulsions sur la valeur moyenne de la tension d'alimentation peut être annulée en produisant un nombre égal d'impulsions supplémentaires de même durée mais de polarité opposée. Il suffit pour cela, comme illustré en traits interrompus sur la figure 1, d'utiliser: un compteur 23' branché comme le compteur 23 mais incrémenté sur les fronts montants des impulsions I1; un monostable 24' qui produit une impulsion I'3 à chaque retour à zéro du compteur 23'; un interrupteur 25' dont la fermeture est commandée par les impulsions I'3 et un condensateur 26' qui se décharge en réponse à la fermeture de l'interrupteur 25' pour superposer une impulsions positive I'4 à la tension d'alimentation lorsque celle-ci passe par zéro dans le sens croissant. Ces impulsions positives permettent de conserver une valeur moyenne nulle à la tension d'alimentation mais n'ont pas d'influence sur la détection.

Dans le mode de réalisation particulier décrit ci-dessus, on a envisagé le cas d'un signal de télécommande sous forme de trains espacés d'impulsions négatives ayant une période multiple de celle de la tension d'alimentation.

Bien entendu, on pourrait aussi utiliser des impulsions positives. En outre, on pourra choisir pour les impulsions une période égale à celle de la tension d'alimentation. Il est même possible de combiner des impulsions positives et négatives de période égale à la demi-période de la tension d'alimentation.

Le dispositif conforme à l'invention, dont un mode de réalisation a été décrit ci-avant, trouve en outre non seulement une application pour des installations monophasées, mais également pour des installations polyphasées, par exemple triphasées avec ou sans neutre. Dans ce dernier cas, un émetteur et un ou plusieurs récepteurs correspondants sont associés à chaque phase et fonctionne de façon indépendante, sans perturbations entre phases.

**Revendications**

1. Dispositif de télécommande d'appareils de chauffage raccordés à une installation d'alimentation en courant alternatif, dispositif comportant:

— un émetteur central (20) comprenant un détecteur (21) de passage à zéro de la tension d'alimentation, un condensateur (26) branché en série avec un circuit interrupteur (25) aux bornes de l'installation, un circuit (27, 28) de charge du condensateur (26) interposé entre celui-ci et une des bornes de l'installation d'alimentation pour permettre la charge du condensateur après chaque ouverture du circuit interrupteur, et un générateur d'informations codées par impulsions (22, 23, 24) synchronisé par le détecteur pour commander la formeture du circuit interrupteur en réponse à une impulsion produite par le générateur au moment d'un passage à zéro de la tension d'alimentation, et

— un récepteur (30) associé à chaque appareil et comprenant un détecteur (32) d'impulsions au passage à zéro de la tension d'alimentation et un circuit de décodage (33, 37) relié au détecteur d'impulsions pour fournir un signal d'identification lorsque l'information émise a été reconnue, caractérisé en ce que:

— un circuit de filtrage (15) est interposé entre l'installation d'alimentation et un réseau de distribution (12) sur lequel l'installation est branchée, de manière à empêcher la propagation dans le réseau des impulsions (I4) produites par l'émetteur (20),

— le générateur d'impulsions (22, 23, 24) engendre des trains périodiques d'impulsions formés chacun d'impulsions (I3) de période prédéterminée (T3) égale à ou multiple de la demi-période de la tension d'alimentation, la période (T2) des trains d'impulsion étant au moins égale à plusieurs dizaines de fois leur durée (D2), et

— le circuit de décodage comporte un circuit à coïncidence (37) produisant un signal (I8) en réponse à la détection d'au moins deux impulsions séparées d'un intervalle de temps égal à ladite période prédéterminée (T3) des impulsions de chaque train.

2. Dispositif selon la revendication 1, caractérisé en ce que le circuit de décodage comporte un circuit monostable (38) qui est déclenché par le signal produit par le circuit à coïncidence (37) et qui revient au repos en l'absence de réception d'un signal du circuit à coïncidence pendant un intervalle de temps prédéterminé supérieur à la période des trains d'impulsions produits par l'émetteur (20).

3. Dispositif selon l'une quelconque des revendications 1 et 2, caractérisé en ce que chaque impulsion (I4) superposée au passage à zéro de la tension d'alimentation (V0) a une polarité égale à celle de cette tension après son passage à zéro.

4. Dispositif selon l'une quelconque des revendications 1 à 3, caractérisé en ce que lorsque l'information à transmettre est codée sous forme d'impulsions de polarité invariable, un même nombre d'impulsions de polarité opposée et de même durée sont superposées à la tension d'alimentation, de manière à conserver à celle-ci une valeur moyenne nulle.

**Patentansprüche**

1. Fernsteuerungsvorrichtung für Heizgeräte, die an eine Wechselstromzuführeinrichtung angeschlossen sind, mit:

— einem zentralen Sender (20) mit einem Null-durchgangsdetektor (21) für die Zufüh-rungsspannung, einem mit einem Unter-brecherkreis (25) von den Klemmen der Ein-richtung in Serie abzweigenden Konden-sator (26), einem Ladekreis (27, 28) des Kondensators (26), der zwischen diesem und einer der Klemmen der Zuführeinrichtung zur Ermöglichung der Ladung des Kondensators nach jedem Öffnen des Unterbrecherkreises zwischengeschaltet ist, und einem Generator für durch Impulse (22, 23, 24) kodierte Informationen, der zur Steuerung des Schließens des Unterbrecherkreises in Antwort auf einen vom Generator zum Zeitpunkt eines Nulldurchgangs der Zuführungsspannung erzeugten Impuls vom Detektor synchronisiert wird, und

— einem Empfänger (30), der mit jedem Gerät verbunden ist und einen Nulldurchgangs-Impulsdetektor (32) für die Zuführungs-spannung und einen Dekodierkreis (33, 37) umfaßt, der zur Lieferung eines Identi-fikationssignals bei Erkennung der gesen-deten Information mit dem Impulsdetektor verbunden ist, dadurch gekennzeichnet, daß

— ein Filterkreis (15) zwischen der Zuführeinrichtung und einem Verteilernetz (12), von dem die Einrichtung abzweigt, zwischengeschaltet ist, so daß die Weiterverbreitung in das Netz der durch den Sender (20) er-zeugten Impulse (I4) verhindert wird,

— der Impulsgenerator (22, 23, 24) periodische Impulszüge erzeugt, die jeweils von Impulsen (I3) von vorbestimmter Perioden-dauer (T3), die gleich oder ein Vielfaches der halben Periodendauer der Zuführungsspannung ist, gebildet werden, wobei die Periodendauer (T2) der Impulszüge zumindest gleich mehreren Zehnfachen ihrer Dauer (D2) ist, und

— der Dekodierkreis eine Koinzidenzschaltung (37) umfaßt, die in Antwort auf die Erkennung von zumindest zwei getrennten Impulsen eines Zeitintervalls, der gleich der vorbestimmten Periodendauer (T3) der Impulse jedes Zugs ist, ein Signal (I8) erzeugt.

2. Vorrichtung nach Anspruch 1, dadurch gekennzeichnet, daß der Dekodierkreis einen monostabilen Kreis (38) umfaßt, der durch das vom Koinzidenzkreis (37) erzeugte Signal getriggert wird und bei Fehlen eines Empfangs eines Signals vom Koinzidenzkreis während eines vorbestimmten Zeitintervalls, das größer als die Taktzeit der vom Sender (20) erzeugten Impulszüge ist, in Ruhestellung zurückkehrt.

3. Vorrichtung nach einem der Ansprüche 1 und 2, dadurch gekennzeichnet, daß jeder der Zuführungsspannung (V0) im Nulldurchgang überlagerte Impuls (I4) eine Polarität hat, die gleich ist jener dieser Spannung nach dem Nulldurchgang.

4. Vorrichtung nach einem der Ansprüche 1 bis 3, dadurch gekennzeichnet, daß bei Kodierung der zu übertragenden Information in Form von Impulsen gleicher Polarität eine gleiche Zahl an Impulsen gegensätzlicher Polarität und gleicher Dauer der Zuführungsspannung überlagert ist, so daß diese einen Null-Mittelwert beibehält.

**Claims**

1. Remote control device for heating apparatuses connected to alternating current supply means, which device comprises:

— a central transmitter (20) comprising means (21) of detecting the zero-crossing of the supply voltage, a capacitor (26) connected in series with a switching device (25) to the terminals of the supply means, a circuit (27, 28) for charging the capacitor (26) interposed between the latter and one of the terminals of the supply means to enable charging of the capacitor after each opening of the switching circuit, and a pulse-coded information generator (22, 23, 24) synchronised by the detector to control the closing of the switching circuit in response to a pulse produced by the generator at a zero-crossing of the supply voltage, and

— a receiver (30) connected to each apparatus and comprising means (32) of detecting the pulses at the zero-crossing of the supply voltage and a decoding circuit (33, 37) connected to the pulse detector to supply an identification signal when the information transmitted is identified, characterised in that

— a filtering circuit (15) is interposed between the supply means and a distribution network (12) to which the supply means is connected so as to prevent the pulses (14) produced by the transmitter (20) from propagating in the network,

— the pulse generator (22, 23, 24) generates periodical pulse trains, each consisting of pulses (13) of predetermined period (T3) equal or multiple of the half-period of the supply voltage, the period (T2) of the pulse trains being at least equal to several scores of times their duration (D2), and

— the decoding circuit comprises a coincidence circuit (37) producing a signal (18) in response to the detection of at least two pulses separated by a time interval equal to said predetermined period (T3) of the pulses of each train.

2. A device according to claim 1, characterised in that the decoding circuit comprises a mono-stable circuit (38) which is triggered by the signal produced by the coincidence circuit (37) and which returns to the rest position when no signal is received from the coincidence circuit during a predetermined time interval greater than the period of the pulse trains produced by the transmitter (20).

3. A device according to any of claims 1 and 2, characterized in that each pulse (14) superposed at the zero crossing of the supply voltage (VO) has a polarity equal to that of said voltage after the latter has crossed zero.

4. A device according to any one of claims 1 to 3, characterized in that when the information to be transmitted is coded in the form of pulses of invariable polarity, the same number of pulses of opposite polarity and of similar duration is superposed on the voltage supply so that the latter keeps a nil average value.

Fig_1

0 037 763

Fig. 2

0 037 763